# EUROPEAN PATENT SPECIFICATION

(11) **EP 1 655 185 B1**
(45) Date of publication and mention of the grant of the patent: **25.04.2007**
(21) Application number: 05380242.7
(22) Date of filing: 31.10.2005
(51) Int. Cl.: B60R 21/34

(54) **Retaining device for the bonnet of a motor vehicle, and system that includes such device**
Rückhaltevorrichtung für eine Fahrzeughaube und System mit einer solchen Vorrichtung
Dispositif de retenu pour le capot d'un véhicule et système comprenant un tel dispositf

(30) Priority: 05.11.2004 ES 200402656
(43) Date of publication of application: 10.05.2006
(73) Proprietor: Tubsa Automocion, S.L., 08960 Sant Just Desvern (ES)
(72) Inventor: Santana de la Rosa, Juan Antonio, 08960 Sant Just Desvern (ES); Solsona Lorente, Anselm, 08960 Sant Just Desvern (ES); Gongora Plo, Fernando, 08960 Sant Just Desvern (ES)
(74) Representative: SUGRANES - VERDONCES - FERREGÜELA

(56) References cited:
- WO-A-02/072393
- DE-A1- 19 721 565
- DE-A1- 19 948 881

## Description

### Technical field of the invention

The invention relates to a device for limiting the opening travel of the bonnet of a motor vehicle when said bonnet is actively moved from its closed position, to absorb the impact of a pedestrian against the components of the vehicle's engine that are located under the bonnet, in the event of collision with a pedestrian. The invention also relates to a system that includes said device.

### Background of the invention

In order to protect pedestrians in the event of a collision, some motor vehicles have active systems that, in response to the signal generated by sensors on the front of the vehicle, activate a thrusting or moving mechanism that raises the bonnet, which is originally closed, in order to increase the separation between the bonnet and the engine block. In this way, the impact of the pedestrian, and in particular the pedestrian's head, is absorbed by the buckling of the bonnet. Otherwise, the bonnet would not be able to buckle due to its proximity to the engine block, the rigidity of which would prevent the bonnet from buckling, and the pedestrian would hit this, increasing the harm caused the pedestrian.

To do this, the thrusting device must be activated at sufficient speed for the bonnet to have been moved from its original position before receiving the impact of the pedestrian. Instead of using hydraulic, pneumatic or electromotor systems, pyrotechnic systems are used for this, wherein the movement results from a controlled explosion. However, the opening travel of the bonnet must also be controlled in order to avoid excessive movement of the bonnet that could be counterproductive, whereby the pedestrian could even be hit by movement of the bonnet itself.

Numerous devices are incorporated into the aforementioned systems for this purpose, in particular those which limit the travel of the bonnet and block it in a raised position when they are moved in the event of collision with a pedestrian. These devices do, however, have to allow the bonnet to be opened in normal conditions; for example, for an inspection. The known devices are excessively complex, whilst they do not resolve the problem of these devices having to allow the bonnet to be opened in normal conditions and retaining it in the event of an accident.

As an example, the generic document WO-A-02/072393 discloses a safety arrangement comprising a unit to be located beneath the bonnet of a motor vehicle, said unit being adapted to become increased length in response to a signal from a sensor and having a catch arrangement adapted to engage part of the bonnet structure configured as a barb which is engaged and retained when length of the unit is increased.

Another example is described in document DE-A-19721565, in which a device for protecting pedestrians has a sensor device at the front of the vehicle to detect an impending or actual collision with a pedestrian. A control element triggered by the sensor displaces a front bonnet from its rest position into a raised impact position. The bonnet is locked in its rest position and can be at least partly opened about the horizontal axis by a spring. The control element is an unlocking device for the bonnet lock. The bonnet opening is released by the spring after the triggering occurs and a limiter fixes the defined opening distance and hence the raised impact position.

### Explanation of the invention

The retaining device for the bonnet of a motor vehicle that is the object of the invention overcomes the aforementioned problems. The device comprises a connecting member, adapted so as to be fixed to the inside of the bonnet of the motor vehicle, that comprises a protruding pin, the free extremity whereof ends in a widened head that has the overall form of an inverted conical arrow; and a fastening member, adapted so as to be connected to the chassis of the vehicle.

Essentially, the device is characterised in that the fastening member includes a clip comprising two arms joined articulatedly that are forced towards each other by means of an elastic mechanism, all of which is adapted in such a way that, with the pin positioned between the arms of the clip, the movement of the fastening member in the direction wherein the bonnet opens causes the connecting member to move by traction and as no exterior force acts on the arms of said clip to oppose the force applied by the elastic mechanism on said arms, the head of the connecting member is stopped by the arms of the clip, thus preventing the separation of the connecting member and the fastening member, which means that they are both connected with a certain amount of clearance, so that the bonnet of the motor vehicle and the fastening member are in turn connected with the same clearance, allowing the bonnet to move a certain distance, in which it opens in relation to the fastening member, along the length of the pin in the direction.

According to another characteristic of the invention, the arms of the clip in the fastening member comprise an end section where the two arms come into contact when the clip is closed, followed by an intermediate section shaped in such a way that as the two arms are brought into contact with one another when the clip is closed, the intermediate sections of the two arms are kept at a distance from one another, establishing a free space of separation between said sections so that on receiving the thrust of the head of the pin on the connecting member as it approaches the fastening member to engage with it, the clip is forced open.

According to another feature of the invention, the size of the free space of separation between the intermediate sections of the arms of the clip is such that it allows the pin to slide in both directions through the free space of separation between the arms of the pin, when the clip is closed and the connecting member and the fastening member are connected.

Preferably, the contact edge between the two arms is at least partially bevelled in the intermediate section to correspond with the inverted conical form of the head of the pin on the connecting member.

According to another characteristic of the invention, the fastening member of the device has a mechanism for opening the clip, which allows the separation of its arms by overcoming the force of the elastic mechanism that tends to force said arms towards each another and close the clip, thus allowing the head of the pin to be removed and the separation of the connecting member from the fastening member.

In a preferred embodiment, the means of aperture comprise two identical levers joined articulatedly, each of which is respectively joined, also articulatedly, to one of the arms of the clip, in such a way that the corresponding points of articulation of the arms, the levers and the arms with the levers form a trapezoid-deltoid, meaning that the movement of the mutual point of articulation between the levers in one direction or the other causes the arms of the clip to move towards or away from each other, respectively, which consequently causes the clip to open or close.

According to another feature of the invention, a traction element, such as a cable, rod or similar means, is fixed to the mutual point of articulation between the identical levers of the means of aperture, being adapted so as to move the aforementioned mutual point of articulation by traction towards the point of articulation of the arms of the clip, which separates said arms and causes the clip to open.

According to another characteristic of the invention, the clip is rotationally joined to a plate on the casing that surrounds the fastening member, the plate having a hole of which the axis coincides with the free space of separation between the intermediate sections of the arms of the clip, allowing the pin and the head of the connecting member to enter through the aforementioned hole for said member to engage with the retaining member.

In a preferred embodiment of the device, the arms each have a tab that limits the rotational movement of the clip in relation to the casing, as said tabs come into contact with stops positioned for this purpose on the aforementioned casing.

According to another characteristic of the invention, the plate of the casing has an arched strip for guiding and support, which is adapted so as to guide the ends of the arms during their movements of aperture and closure of the clip and to support said ends as the head is thrust through the arms on closure of the bonnet.

According to another aspect of the invention, a system that is applicable to the bonnet of a motor vehicle is introduced for the protection of pedestrians in the event of a collision, which incorporates an active thrusting or moving mechanism of the bonnet that, in response to a command signal, moves the bonnet to create an additional distance between the aforementioned bonnet and the engine block in order to avoid the impact of the pedestrian's head against the engine block.

This device is characterised in that the thrusting mechanism comprises a lifting member, activated by an explosive charge, and in that the system incorporates a retaining device according to claim 1, the connecting member of which is fixed to the inside of the bonnet and the fastening member of which is fixed to the aforementioned lifting member in such a way that, in the event of a collision, during the first stage the thrusting movement of the lifting member causes the bonnet to move and in the second stage, once the movement of the lifting member has stopped, the bonnet continues to move by inertia until the head of the connecting member is stopped by the clip of the fastening member.

According to another characteristic of the system, it also comprises a retaining element, which is solidly joined to the chassis of the vehicle and is adapted to retain the clip of the fastening member in the open position by preventing the movement of its arms if there is no movement of the lifting member, and if the aforementioned lifting member does move, as the fastening member moves in relation to the chassis of the vehicle, the retaining element stops acting on the clip, thus causing it to close automatically as a result of the elastic mechanism.

### Brief description of the drawings

In the attached drawings a preferred embodiment of a retaining device for the bonnet of a motor vehicle according to the invention is illustrated by means of a non-limiting example. In said drawings:
- Fig. 1,: is a perspective view of the connecting member and the fastening member that comprise the device, in a situation prior to their connection;
- Fig. 2,: is a view of the underneath of the whole device, in an intermediate position of connection between the connecting member and the fastening member, wherein the clip of the aforementioned fastening member is forced open by the thrust of the head of the connecting member;
- Fig. 3,: is also a view of the underneath of the whole device, where the connecting member and the fastening member are connected, with the clip closed; and
- Fig. 4,: is another view of the underneath of the whole device, with the clip open, meaning that the connecting member is in a position to become separated from the retaining member.

### Detailed description of the drawings

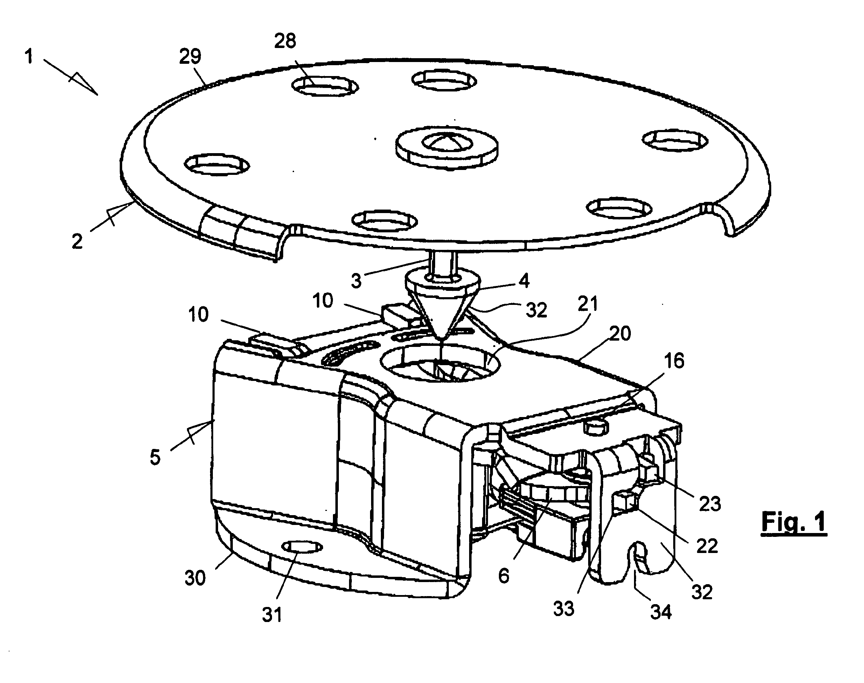

The retaining device 1 in the drawings consists, as shown in Fig. 1, of two parts, one of which is for fixing to the bonnet of a motor vehicle and the other, indirectly or directly, to the chassis of the same vehicle. In the example in the drawings, the first part is formed by the connecting member 2, which comprises a support plate 29 with several holes 28 through which the support plate 29 and the connecting member 2 itself, can be screwed to the bonnet of the vehicle, whilst the second part is formed by the fastening member 5, which also has its respective support plates 30 by which the fastening member is fixed to the chassis of the vehicle, or to an element that is moveable in relation to the aforementioned chassis, as explained below. As in the connecting member 2, the support plates 30 of the fastening member have their respective holes 31 for fixing them, for example, with screws.

In the same Fig. 1 it can be seen that the connecting member 2 comprises a protruding pin 3, the free extremity whereof ends in a widened head 4 in the form of an inverted conical arrow.

The connecting member 2 and the fastening member 5 are fixed to the bonnet and the chassis of the vehicle, respectively, in such a way that from a position wherein the bonnet of the vehicle is open, when the bonnet is closed the head 4 and the pin 3 of the connecting member 2, which are solidly joined to the bonnet, are inserted into said casing through the hole 21 in the plate 20 of the casing of the fastening member 5, so that the connecting member 2 and the fastening member 5 are connected with a certain amount of clearance and are separable.

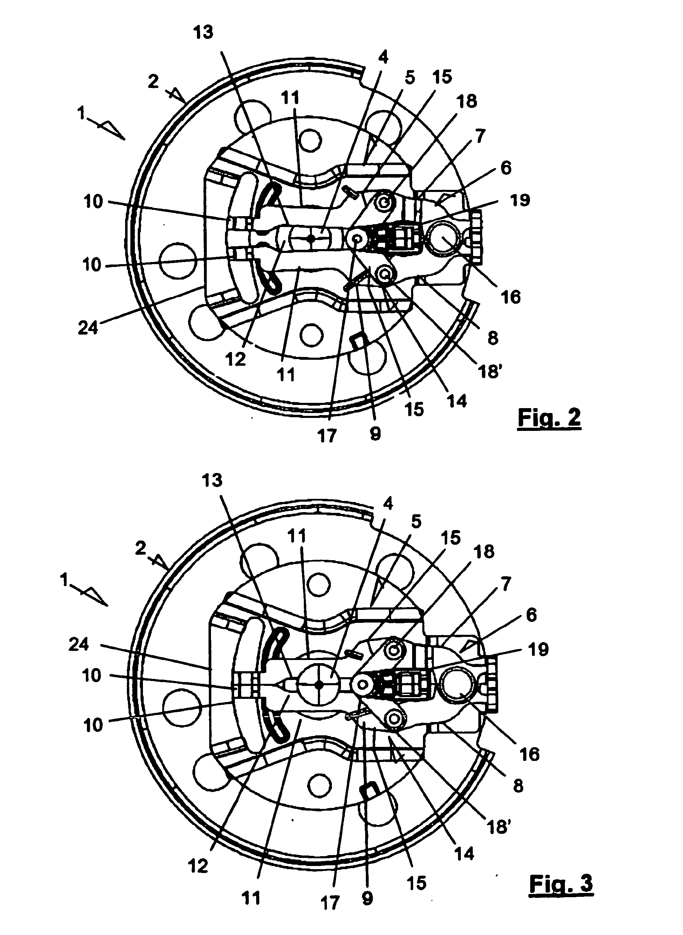

For this purpose, the connecting member 5 has a clip 6 consisting of two arms 7 and 8 joined articulatedly to the plate 20 at the point of articulation 16, which tend to be forced towards each other by an elastic mechanism 9, using a spring or torsion spring which is in itself known. These arms 7 and 8 are separated when, on closure of the bonnet, the widened head 4 forces them apart with the thrust of its sloping outer wall 32 against the arms 7 and 8, and particularly against the bevelled edges 13 of the aforementioned arms, all of which is as shown in Fig. 2.

The same arms 7 and 8 come together again, forced by the torsion spring 9, as the head 4 fully passes through the clip 6, so that the connecting member 2 and the fastening member 5 are connected, and consequently the bonnet of the vehicle and the chassis too, as the shape of the head 4 means that it acts as an anti-return element so that even if the connecting member 2 moves in the opposite direction to that of its connection to the fastening member 5, the arms 7 and 8 of the clip 6 will not be forced apart.

In Figs. 2 to 4 it can be seen that each of the arms 7 and 8 comprise end sections 10 that come into contact with each other when the clip 6 is closed, followed by an intermediate section 11 that is shaped in such a way that, with the clip 6 closed, some parts of said intermediate sections 11 are slightly apart from one another establishing a free space of separation 12 between them, and therefore between the two arms 7 and 8. This free space of separation 12 aids the aperture of the clip 6 by the thrust of the head 4, whilst also allowing the pin 3, with the clip 6 closed and the connecting member 2 and the fastening member 5 connected, to slide through the arms 7 and 8 of the clip 6 in both directions, until the head 4 is stopped by the arms 7 and 8 of the clip 6 or until the support plate 28 of the connecting member 2 is stopped by said arms. In this way, despite the fact that both parts remain connected due to the effect of the clip 6 and the head 4, there is a small amount of clearance between them and therefore the bonnet can move in relation to the connecting member a certain distance along the length of the aforementioned pin 3.

On closure of the bonnet, in order to prevent the vertical component of the thrusting force of the head 4 being transmitted to the point of articulation and connection 16 of the clip 6 to the plate 20 of the casing of the fastening member 5, with the possibility of breaking said connection, the plate 20 has an arched strip 24 for guiding and support that is adapted to support the end sections 10 of the arms 7 and 8 as the head 4 is thrust through the arms on closure of the bonnet. Furthermore, the same arched strip 24 also acts as a guide for the aforementioned end sections 10 of the arms 7 and 8 during the opening and closing travel of the clip 6.

This device is particularly applicable in a system for the protection of pedestrians in the event of a collision. These systems include an active thrusting or moving mechanism of the bonnet that, in response to a command signal, moves the bonnet to create an additional distance between the aforementioned bonnet and the engine block in order to avoid the impact of the pedestrian's head against the engine block. More specifically, the fastening member in the drawings is specially adapted to be fixed to the upper end of a lifting member that is part of the aforementioned thrusting mechanism, which is activated by a explosive charge. With the connecting member 2 fixed to the inside of the bonnet and the fastening member 5 fixed to the aforementioned lifting member, in the event of a collision, during the first stage the thrusting movement of the lifting member causes the fastening member to move, thereby moving the connecting member 2 which in turn moves the bonnet; and during the second stage, once the movement of the lifting member and the fastening member 5 fixed thereto has stopped, the bonnet continues to move by inertia until the head 4 of the connecting member 2 is stopped by the clip 6 of the fastening member 5. The distance travelled by the bonnet during the second stage depends on the length of the pin 3, which is the distance separating the head 4 from the support plate 29 of the connecting member.

Moreover, the device shown in Figs. 1 to 4 has a means of aperture 14 of the clip 6 that allows the separation of the arms 7 and 8 of the clip, with the bonnet closed, by overcoming the force of the elastic mechanism 9, thus allowing the head 4 to be removed and the separation of the connecting member 2 from the retaining member 5. This makes it possible to open the bonnet in normal conditions; for example, to inspect the engine block or to carry out necessary maintenance work.

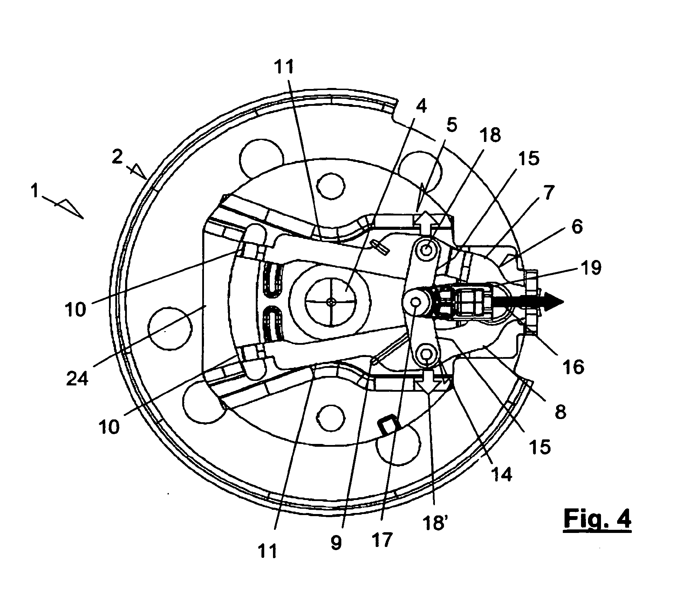

The means of aperture 14 comprises two identical levers 15 joined articulatedly at a point of articulation 17, each of which is respectively joined, also articulatedly, to one of the arms 7 and 8 of the clip 6 at the articulated connection points 18 and 18'. The point of articulation 16 of the arms 7 and 8 of the clip, together with the points of articulation 18 and 18' of each lever 15 to the corresponding arm and the mutual point of articulation 17 between the levers 15, form an articulated trapezoid-deltoid, so that the movement of the mutual point of articulation 17 between the levers 15 in the direction shown by the shaded arrow in Fig. 4 causes the separation of the arms 7 and 8 of the clip 6 (as is shown by the non-shaded arrows in Fig. 4), and consequently the aperture of the clip.

The means of aperture 14 comprises an adaptor 31, at the aforementioned point of articulation 17 of the levers 15, for fixing said point to a traction element such as a cable, rod or similar means, not shown in the drawings, for moving the point of articulation 17 by traction in the direction of the point of articulation 16 of the arms 7 and 8 of the clip 6, which, as has been explained above, brings about the separation of the arms 7 and 8 and causes the clip 6 to open.

As regards said system for the protection of pedestrians, the inventor plans to fix two connecting members to the bonnet to work with two fastening members. In order to counteract any margin that might exist with regard to the position wherein the connecting members 2 are fixed in relation to the fastening members 5, the clip 6 is joined rotationally to the plate 20 of the casing of the fastening member, in such a way that the clip can move slightly, rotating in relation to the articulated connection point 16, in order to adjust its final position to that of the head 4 of the connecting member and thus make the aforementioned head 4 coincide with the free separating space 12 between the arms 7 and 8 of the clip 6, thus ensuring the correct connection between the connecting members 2 and the fastening members 5 on closing the bonnet. In order to limit the rotational movement of the clip 6, which allow their position to be corrected, the arms 7 and 8 of the clip 6 each have tabs 22 and 23 (see Fig. 1) that limit the rotation of the clip 6 as it comes into contact with stops positioned on the back wall 32 of the plate 20 of the fastening member 5, which is essentially positioned perpendicular thereto. In the example in the drawings, the stops consist of the ends of a slot 33 through which the tabs 22 and 23 pass. Likewise, the same back wall 32 has a notch 34 that acts as a guide for the traction element that causes the clip 6 to open.

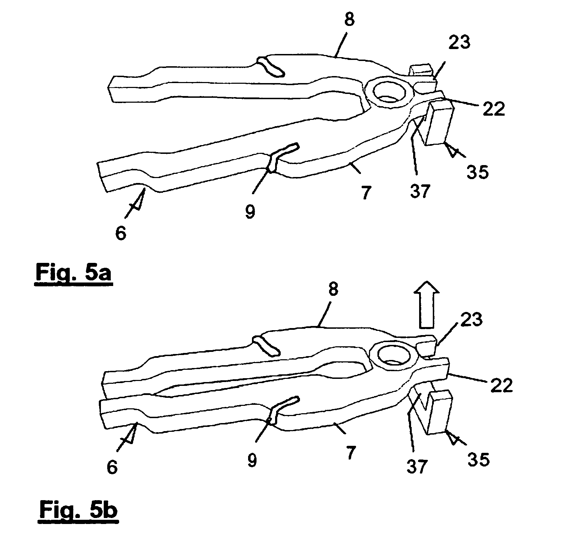

Alternatively, it is be possible to provide the system for the protection of pedestrians with a retaining element 35 (see Figs. 5a and 5b), solidly joined to the chassis of the vehicle, that is adapted so as to retain the clip 6 in an open position whilst there is no collision. The example of the retaining element shown by way of a diagram in Figs. 5a and 5b has a slot 37, which is open at the top, into which the tabs 22 and 23 of the arms 7 and 8 of the clip 6 are normally inserted. Thus, the clip 6 is normally open, meaning that the bonnet of the vehicle can be opened without having to actuate the clip 6 to open it, as said clip is not an obstacle for the pin (not shown) of the connecting member. Fig. 5a shows the above-described situation, wherein the clip 6 remains open.

In the event of a collision, the explosion of the explosive charge causes the upward movement, in the direction shown by the arrow in Fig. 5b, of the lifting member, in turn moving the clip 6 in relation to the retaining element 35 which remains fixed to the chassis of the vehicle. Consequently, the tabs 22 and 23 will slide through the inside of the slot 37 until they come out of it, which is when the clip 6 automatically closes as a result of the effect of the elastic mechanism 9 as shown in Fig. 5b.

Once the movement of the lifting member and the fastening member 5 fixed thereto has stopped, the bonnet continues to move by inertia until the head 4 of the connecting member 2 is stopped by the clip 6 of the fastening member 5, which is now closed. The distance travelled by the bonnet during the second stage depends on the length of the pin 3, which is the distance separating the head 4 from the support plate 29 of the connecting member.

## Claims

1. Retaining device (1) for the bonnet of a motor vehicle, particularly for limiting the opening travel of the bonnet when it is actively moved from its closed position, being in a resting position in relation to chassis of the vehicle, in the direction of its aperture to absorb the impact of a pedestrian, in the event of a collision, against the components of the vehicle's engine that are located under the bonnet, the retaining device comprising a connecting member (2) adapted to be fixed to the inside of the bonnet of the motor vehicle, with said connecting member consisting of a protruding pin (3), the free extremity whereof ends in a widened head (4) that has the overall form of an inverted conical arrow; and a fastening member (5), adapted so as to be connected to the chassis of the vehicle, **characterised in that** the fastening member includes a clip (6) comprising two arms (7, 8) joined articulatedly that are forced towards each other by means of an elastic mechanism (9),
all of which is adapted in such a way that, with the pin (3) positioned between the arms (7,8) of the clip (6), the movement of the fastening member (5) in the direction in which the bonnet opens causes the connecting member (2) to move by traction and as no exterior force acts on the arms (7, 8) of said clip (6) to oppose the force applied by the elastic mechanism (9) on said arms (7, 8), the head (4) of the connecting member (2) is stopped by the arms (7, 8) of the clip (6), thus preventing the separation of the connecting member (2) and the fastening member (5), which means that they are both connected with a certain amount of clearance, so that the bonnet of the motor vehicle and the fastening member (5) are in turn connected with the same clearance, allowing the bonnet to move a certain distance, in relation to the fastening member (5), along the length of the pin (3) in the direction in which it opens.

2. Device according to claim 1, **characterised in that** the arms (7, 8) of the clip (6) of the fastening member (5) comprise an end section (10) where the two arms come into contact when the clip is closed, followed by an intermediate section (11) shaped in such a way that as the two arms are brought into contact with one another when the clip is closed, the intermediate sections of the two arms are kept at a distance from one another, establishing a free space of separation (12) between said sections so that on receiving the thrust of the head (4) of the pin (3) on the connecting member as it approaches the fastening member to engage with it, the clip is forced open.

3. Device according to claim 2, **characterised in that** the size of the free space of separation (12) between the intermediate sections (11) of the arms (7, 8) of the clip (6) is such that it allows the pin (3) to slide in both directions through the free space of separation between the arms of the pin, when the clip is closed and the connecting member (2) and the fastening member (5) are connected.

4. Device according to claims 2 and 3, **characterised in that** the contact edge (13) between the two arms (7, 8) is at least partially bevelled in the intermediate section (11) to correspond with the inverted conical form of the head (4) of the pin (3) on the connecting member (2).

5. Device according to the previous claims, **characterised in that** the fastening member (5) of the device has a means of aperture (14) of the clip (6), which allows the separation of its arms (7, 8) by overcoming the force of the elastic mechanism (9) that tends to force said arms towards each another and close the clip, thus allowing the head (4) of the pin (3) to be removed and the separation of the connecting member (2) from the fastening member.

6. Device according to claim 5, **characterised in that** the means of aperture (14) comprise two identical levers (15) joined articulatedly, each of which is respectively joined, also articulatedly, to one of the arms (7, 8) of the clip (6), in such a way that the corresponding points of articulation of the arms (16), the levers (17) and the arms with the levers (18, 18') form a trapezoid-deltoid, meaning that the movement of the mutual point of articulation (17) between the levers (15) in one direction or the other causes the arms of the clip to move towards or away from each other, respectively, which consequently causes the clip to open or close.

7. Device according to claim 6, **characterised in that** a traction element, such as a cable, rod or similar means, is fixed to the mutual point of articulation (17) between the identical levers (15) of the means of aperture (14), being adapted so as to move the aforementioned mutual point of articulation by traction towards the point of articulation (16) of the arms (7, 8) of the clip (6), which separates said arms and causes the clip to open.

8. Device according to the previous claims, **characterised in that** the clip (6) is rotationally joined to a plate (20) on the casing that surrounds the fastening member (5), the plate having a hole (21) of which the axis coincides with the free space of separation (12) between the intermediate sections (11) of the arms (7, 8) of the clip, allowing the pin (3) and the head (4) of the connecting member (2) to be inserted through the aforementioned hole for said member to engage with the retaining member.

9. Device according to claim 8, **characterised in that** the arms (7, 8) each have tabs (22, 23) that limit the rotational movement of the clip (6) in relation to the casing, as said tabs come into contact with stops positioned for this purpose on the aforementioned casing.

10. Device according to claim 8, **characterised in that** the plate (20) of the casing has an arched strip (24) for guiding and support, which is adapted so as to guide the ends of the arms (7, 8) during their movements of aperture and closure of the clip and to support said ends as the head (4) is thrust through the arms on closure of the bonnet.

11. System applicable to the bonnet of a motor vehicle for the protection of pedestrians in the event of a collision, which includes an active thrusting or moving mechanism of the bonnet that, in response to a command signal, moves the bonnet to create an additional distance between the aforementioned bonnet and the engine block in order to avoid the impact of the pedestrian's head against the engine block, said thrusting mechanism comprising a lifting member activated by an explosive charge, **characterised in that** the system incorporates a retaining device according to claim 1, the connecting member (2) of which is fixed to the inner side of the bonnet and the fastening member (5) of which is fixed to the aforementioned lifting member, and all in such a way that, in the event of a collision, during the first stage the movement of the lifting member, by thrust, causes the bonnet to move and in the second stage, once the movement of the lifting member has stopped, the bonnet continues to move by inertia until the head (4) of the connecting member is stopped by the clip (6) of the fastening member.

12. System according to claim 11, **characterised in that** it also comprises a retaining element (35), which is solidly joined to the chassis of the vehicle and is adapted to retain the clip (6) of the fastening member (5) in the open position by preventing the movement of its arms (7, 8) if there is no movement of the lifting member, and if the aforementioned lifting member does move, as the fastening member moves in relation to the chassis of the vehicle, the retaining element stops acting on the clip, thus causing it to close automatically as a result of the elastic mechanism (9).

## Patentansprüche

1. Halterungsvorrichtung (1) für die Haube eines Kraftfahrzeugs, insbesondere um den Öffnungsweg der Haube zu beschränken, wenn sie aktiv aus ihrer geschlossenen Position, bei der sie sich in einer Ruheposition in Bezug auf das Fahrgestell des Fahrzeuges befindet, in die Richtung ihrer Öffnung bewegt wird, um den Aufschlag eines Fußgängers bei einer Kollision gegen die Komponenten eines Fahrzeugmotors zu absorbieren, die sich unter der Haube befinden, wobei die Halterungsvorrichtung umfaßt:
ein Verbindungselement (2) ausgestaltet um an der Innenseite der Haube des Kraftfahrzeugs befestigt zu werden, wobei das Verbindungselement aus einem hervorstehenden Bolzen (3), dessen freies Ende in einem erweiterten Kopf (4) sitzt, der die grobe Form eines .umgedrehten konischen Pfeils hat; und ein Befestigungselement (5), ausgestaltet um mit dem Fahrgestell des Fahrzeugs verbunden zu werden, **dadurch gekennzeichnet, daß** das Befestigungselement eine Klemme (6) mit zwei Armen (7, 8) umfaßt, die gelenkig aneinandergefügt sind und die durch einen elastischen Mechanismus (9) aufeinander gedrückt werden,
wobei die gesamte Anordnung derart ausgestaltet ist, daß mit dem Bolzen (3) zwischen den Armen (7, 8) der Klemme (6), die Bewegung des Befestigungselements (9) in die Richtung, in welche die Haube öffnet, das Verbindungselement (2) veranlaßt, sich durch Zugkraft zu bewegen und, da keine äußere Kraft auf die Arme (7, 8) der Klemme (6) gegen die Kraft wirkt, die durch den elastischen Mechanismus (9) auf die Arme (7, 8) ausgeübt wird, der Kopf (4) des Verbindungselements (2) durch die Arme (7, 8) der Klemme (6) gestoppt wird, wodurch die Trennung des Verbindungselements (2) und des Befestigungselements (5) unterbunden wird, was bedeutet, daß sie beide mit einem bestimmten Freiraum verbunden sind, so daß die Haube und das Befestigungselement (5) wiederum mit dem gleichen Freiraum verbunden sind, wodurch zugelassen wird, daß sich die Haube relativ zum Befestigungselement (5), entlang der Länge des Bolzens (3) in die Richtung, in welche sie öffnet, um eine bestimmte Distanz bewegt.

2. Vorrichtung nach Anspruch 1, **dadurch gekennzeichnet, daß** die Arme (7, 8) der Klemme (6) des Befestigungselements (5) umfassen: einen Endabschnitt (10), wo die beiden Arme miteinander in Kontakt kommen, wenn die Klemme geschlossen ist, gefolgt von einem Zwischenabschnitt (11) so geformt, daß die beiden Arme in Kontakt kommen, wenn die Klemme geschlossen wird, wobei die Zwischenabschnitte der beiden Arme auf Distanz voneinander gehalten werden, wodurch ein Freiraum (12) zwischen den Abschnitten geschaffen wird, so daß durch Aufnahme des Drucks des Kopfes (4) des Bolzens (3) am Verbindungselement beim Annähern an das Befestigungselement zur Verbindung mit demselben die Klemme aufgedrückt wird.

3. Vorrichtung nach Anspruch 2, **dadurch gekennzeichnet, daß** die Größe des Freiraums (12) zwischen den Zwischenabschnitten (11) der Arme (7, 8) der Klemme (6) so ist, daß der Bolzen in beide Richtungen durch den Freiraum zwischen den Armen des Bolzens gleiten kann, wenn die Klemme geschlossen ist, und das Verbindungselement (2) und das Befestigungselement (5) verbunden sind.

4. Vorrichtung nach Anspruch 2 und 3, **dadurch gekennzeichnet, daß** die Kontaktkante (13) zwischen den beiden Armen (7, 8) in dem Zwischenabschnitt (11) mindestens teilweise schräg ist, um zur umgedrehten konischen Form des Kopfes (4) des Bolzens (3) am Verbindungselement (2) zu passen.

5. Vorrichtung nach einem der vorhergehenden Ansprüche, **dadurch gekennzeichnet, daß** das Befestigungselement (5) der Vorrichtung ein Mittel zur Öffnung (14) der Klemme (6) hat, welches die Trennung der Arme (7, 8) ermöglicht, indem die Kraft des elastischen Mechanismus (9) überwunden wird, welcher dazu neigt, die Arme aufeinander zu drücken und die Klemme zu schließen, was den Kopf (4) des Bolzens (3) zu entfernen und die Trennung des Verbindungselements (2) vom Befestigungselement ermöglicht.

6. Vorrichtung nach Anspruch 5, **dadurch gekennzeichnet, daß** das Mittel zur Öffnung (14) umfaßt: zwei identische Hebel (15), die gelenkig aneinandergefügt sind, von denen jeder jeweils auch gelenkig an einem der Arme (7, 8) der Klemme (6) befestigt, so daß die entsprechenden Gelenkachsen der Arme (16), die Hebel (17) und die Arme mit den Hebeln (18, 18') einen Trapezoid-Deltoid formen, was bedeutet, daß die Bewegung der gemeinsamen Gelenkachse (17) zwischen den Hebeln (15) in eine oder die andere Richtung die Arme der Klemme veranlaßt, sich aufeinander zu beziehungsweise voneinander weg zu bewegen, was folglich die Klemme zum Öffnen oder Schließen veranlaßt.

7. Vorrichtung nach Anspruch 6, **dadurch gekennzeichnet, daß** ein Zugkraftelement, wie ein Kabel, eine Stange oder ein ähnliches Mittel, an der gemeinsamen Gelenkachse (17) zwischen den identischen Hebeln (15) des Mittels zur Öffnung (14) befestigt ist, welches ausgestaltet ist, das vorgenannte gemeinsame Gelenk durch Zugkraft in Richtung des Gelenks (16) der Arme (7, 8) der Klemme (6) zu bewegen, was die Arme trennt und die Klemme zum Öffnen veranlaßt.

8. Vorrichtung nach einem der vorhergehenden Ansprüche, **dadurch gekennzeichnet, daß** die Klemme (6) drehbar an eine Platte (20) auf dem Gehäuse, das das Befestigungselement (5) umgibt, befestigt ist, wobei die Platte ein Loch (21) hat, von dem die Achse mit dem Freiraum (12) zwischen den Zwischensektionen (11) der Arme (7, 8) der Klemme übereinstimmt, wodurch dem Bolzen (3) und dem Kopf (4) des Verbindungselements (2) ermöglicht wird, durch das vorgenannte Loch für das Element eingeführt zu werden, um mit dem Halterungselement in Eingriff gebracht zu werden.

9. Vorrichtung nach Anspruch 8, **dadurch gekennzeichnet, daß** die Arme (7, 8) jeweils Zapfen (22, 23) haben, die die Rotationsbewegung der Klemme (6) relativ zum Gehäuse beschränken, da die Zapfen an Anschlägen anstoßen, welche zu diesem Zweck in dem genannten Gehäuse angebracht sind.

10. Vorrichtung nach Anspruch 8, **dadurch gekennzeichnet, daß** die Platte (20) des Gehäuses einen gebogenen Streifen (24) zur Führung und Unterstützung hat, welcher ausgestaltet ist, die Enden der Arme (7, 8) während ihrer Öffnungs- und Schließbewegung der Klemme zu führen und die Enden zu unterstützen, wenn der Kopf (4) durch die Arme beim Schließen der Haube gedrückt wird.

11. Anordnung, die an der Haube eines Kraftfahrzeugs zum Schutz von Fußgängern bei einer Kollision einsetzbar ist, welche einen aktiven Antrieb oder Bewegungsmechanismus der Haube umfaßt, die als Reaktion auf ein Befehlssignal die Haube bewegt, um einen zusätzlichen Abstand zwischen der vorgenannten Haube und dem Motorblock zu schaffen, um den Aufschlag des Kopfes des Fußgängers gegen den Motorblock zu verhindern, wobei der Antriebsmechanismus ein Hebeelement umfaßt, das durch eine explosive Ladung aktiviert wird, **dadurch gekennzeichnet, daß** die Anordnung einer Halterungsvorrichtung nach Anspruch 1 beinhaltet, dessen Verbindungselement (2) an der Innenseite der Haube befestigt ist und dessen Befestigungselement (5) an dem vorgenannten Hebeelement befestigt ist, und alles auf solche Weise, daß im Fall eines Zusammenstoßes während der ersten Stufe die Bewegung des Hebeelements durch Schub die Haube veranlaßt, sich zu bewegen und in der zweiten Stufe, sobald die Bewegung des Hebeelements aufhört, sich die Haube durch Trägheit weiterbewegt, bis der Kopf (4) des Verbindungselements durch die Klemme (6) des Befestigungselements gestoppt wird.

12. Anordnung nach Anspruch 11, **dadurch gekennzeichnet, daß** sie des weiteren ein Halterungselement (35) umfaßt, welches fest am Fahrgestell des Fahrzeugs befestigt ist und ausgestaltet ist, die Klemme (6) des Befestigungselements (5) in der offenen Position zu halten, indem die Bewegung ihrer Arme (7, 8) unterdrückt wird, wenn es keine Bewegung des Hebeelements gibt, und wenn sich das vorgenannte Hebeelement bewegt, da sich das Befestigungselement relativ zum Fahrgestell des Fahrzeugs bewegt, das Halterungselement aufhört, auf die Klemme zu wirken, wodurch sie, verursacht durch den elastischen Mechanismus (9), veranlaßt wird, automatisch zu schließen.

## Revendications

1. Dispositif (1) de retenue pour le capot d'un véhicule à moteur, en particulier pour limiter le parcours d'ouverture du capot lorsqu'il est déplacé activement à partir de sa position fermée, étant dans une position de repos par rapport au châssis du véhicule, dans la direction de son ouverture pour absorber l'impact d'un piéton, dans le cas d'une collision, contre les composants du moteur du véhicule qui sont situés sous le capot, le dispositif de retenue comprenant un élément (2) de liaison adapté pour être fixé à l'intérieur du capot du véhicule à moteur, avec ledit élément de liaison se composant d'une broche (3) saillante, dont l'extrémité libre se termine par une tête (4) élargie qui a la forme générale d'une flèche conique inversée ; et un élément (5) de fixation, adapté de façon à être relié au châssis du véhicule, **caractérisé en ce que** l'élément de fixation comprend une attache (6) comprenant deux bras (7, 8) joints de manière articulée qui sont poussés l'un vers l'autre au moyen d'un mécanisme (9) élastique ; l'ensemble est adapté de telle façon que, avec la broche (3) positionnée entre les bras (7, 8) de l'attache (6), le déplacement de l'élément (5) de fixation dans la direction dans laquelle le capot s'ouvre provoque le déplacement de l'élément (2) de liaison par traction et comme aucune force extérieure n'agit sur les bras (7, 8) de ladite attache (6) pour s'opposer à la force appliquée par le mécanisme (9) élastique, la tête (4) de l'élément (2) de liaison est arrêtée par les bras (7, 8) de l'attache (6), empêchant ainsi la séparation de l'élément (2) de liaison et de l'élément (5) de fixation, ce qui signifie qu'ils sont tous les deux reliés avec un certain niveau de débattement, de sorte que le capot du véhicule à moteur et l'élément (5) de fixation soient à leur tour reliés avec le même débattement, permettant au capot de se déplacer d'une certaine distance, par rapport à l'élément (5) de fixation, le long de la longueur de la broche (3) dans la direction de son ouverture.

2. Dispositif selon la revendication 1, **caractérisé en ce que** les bras (7, 8) de l'attache (6) de l'élément (5) de fixation comprennent une section (10) d'extrémité où les deux bras entrent en contact lorsque l'attache est fermée, suivie d'une section (11) intermédiaire formée de façon que lorsque les deux bras sont amenés en contact l'un avec l'autre lorsque l'attache est fermée, les sections intermédiaires des deux bras sont gardées à une distance l'une de l'autre, créant un espace (12) libre de séparation entre lesdites sections de façon que sur réception de la poussée de la tête (4) de la broche (3) sur l'élément de liaison lorsqu'il s'approche de l'élément de fixation pour s'engager avec celui-ci, l'ouverture de l'attache est forcée.

3. Dispositif selon la revendication 2, **caractérisé en ce que** la taille de l'espace libre de séparation (12) entre les sections (11) intermédiaires des bras (7, 8) de l'attache (6) est telle qu'elle permet à la broche (3) de coulisser dans les deux directions à travers l'espace libre de séparation entre les bras de la broche, lorsque la broche est fermée et que l'élément (2) de liaison et l'élément (5) de fixation sont reliés.

4. Dispositif selon la revendication 2 et la revendication 3, **caractérisé en ce que** le bord (13) de contact entre les deux bras (7, 8) est au moins partiellement biseauté dans la section (11) intermédiaire pour correspondre à la forme de cône inversé de la tête (4) de la broche (3) sur l'élément (2) de liaison.

5. Dispositif selon les revendications précédentes, **caractérisé en ce que** l'élément (5) de fixation du dispositif a un moyen (14) d'ouverture de l'attache (6), qui permet la séparation de ses bras (7, 8) en dominant la force du mécanisme (9) élastique qui tend à pousser lesdits bras l'un vers l'autre et à fermer l'attache, permettant ainsi à la tête (4) de la broche (3) d'être éloignée et la séparation de l'élément (2) de liaison de l'élément de fixation.

6. Dispositif selon la revendication 5, **caractérisé en ce que** les moyens (14) d'ouverture comprennent deux leviers (15) identiques joints de manière articulée, chacun d'eux est respectivement joint, également de manière articulée, à un des bras (7, 8) de l'attache (6), de façon que les points d'articulation correspondants des bras (16), les leviers (17) et les bras avec les leviers (18, 18') forment un deltoïde trapézoïdal, signifiant que le déplacement du point (17) mutuel d'articulation entre les leviers (15) dans une direction ou l'autre entraîne les bras de l'attache à se déplacer l'un vers l'autre ou à s'éloigner l'un de l'autre, respectivement, ce qui par conséquent provoque l'ouverture ou la fermeture de l'attache.

7. Dispositif selon la revendication 6, **caractérisé en ce qu'**un élément de traction, tel qu'un câble, une tige ou un moyen similaire, est fixé(e) au point (17) mutuel d'articulation entre les leviers (15) identiques des moyens (14) d'ouverture, étant adapté(e) de façon à déplacer le point mutuel d'articulation mentionné ci-dessus par traction vers le point (16) d'articulation des bras (7, 8) de l'attache (6), ce qui sépare lesdits bras et provoque l'ouverture de l'attache.

8. Dispositif selon les revendications précédentes, **caractérisé en ce que** l'attache (6) est jointe de façon rotative à une plaque (20) sur le boîtier qui entoure l'élément (5) de fixation, la plaque ayant un trou (21) dont l'axe coïncide avec l'espace (12) libre de séparation entre les sections (11) intermédiaires des bras (7, 8) de l'attache, permettant à la broche (3) et à la tête (4) de l'élément (2) de liaison d'être insérés à travers le trou mentionné ci-dessus pour que ledit élément s'engage avec l'élément de retenue.

9. Dispositif selon la revendication 8, **caractérisé en ce que** les bras (7, 8) ont chacun des languettes (22, 23) qui limitent le déplacement de rotation de l'attache (6) par rapport au boîtier, lorsque lesdites languettes entrent en contact avec des butées positionnées à cet effet sur le boîtier mentionné ci-dessus.

10. Dispositif selon la revendication 8, **caractérisé en ce que** la plaque (20) du boîtier a une bande (24) arquée pour le guidage et le support, qui est adaptée de façon à guider les extrémités des bras (7, 8) au cours de leurs déplacements d'ouverture et de fermeture de l'attache et pour supporter lesdites extrémités lorsque la tête (4) est poussée par l'intermédiaire des bras lors de la fermeture du capot.

11. Système applicable au capot d'un véhicule à moteur pour la protection de piétons en cas de collision, qui comprend un mécanisme de déplacement ou de poussée actif du capot qui, en réponse à un signal de commande, déplace le capot pour créer une distance supplémentaire entre le capot mentionné ci-dessus et le bloc moteur afin d'éviter l'impact de la tête du piéton contre le bloc moteur, ledit mécanisme de poussée comprenant un élément de levage activé par une charge explosive, **caractérisé en ce que** le système intègre un dispositif de retenue selon la revendication 1, dont l'élément (2) de liaison est fixé au côté intérieur du capot et dont l'élément (5) de fixation est fixé à l'élément de levage mentionné ci-dessus, et l'ensemble de façon que, en cas d'une collision, au cours de la première étape le déplacement de l'élément de levage, par poussée, provoque le déplacement du capot et dans la deuxième étape, une fois que le déplacement de l'élément de levage s'est arrêté, le capot continue à se déplacer par inertie jusqu'à ce que la tête (4) de l'élément de liaison soit arrêtée par l'attache (6) de l'élément de fixation.

12. Système selon la revendication 11, **caractérisé en ce qu'**il comprend également un élément (35) de retenue, qui est solidement joint au châssis du véhicule et adapté pour retenir l'attache (6) de l'élément (5) de fixation dans la position ouverte en empêchant le déplacement de ses bras (7, 8) s'il n'y a pas de déplacement de l'élément de levage, et si l'élément de levage mentionné ci-dessus se déplace, lorsque l'élément de fixation se déplace par rapport au châssis du véhicule, l'élément de retenue arrête son action sur l'attache, provoquant ainsi sa fermeture automatique en conséquence du mécanisme (9) élastique.
